# FASCICULE DE BREVET EUROPEEN

(11) **EP 0 368 751 B1**
(45) Date de publication et mention de la délivrance du brevet: **21.07.1993**
(21) Numéro de dépôt: 89403066.7
(22) Date de dépôt: 07.11.1989
(51) Int. Cl.: G02C 7/02, G02C 7/04

(54) **Lentille de contact diffractive gravée**
Strukturierte Diffraktionskontaktlinse
Finished diffractive contact lens

(30) Priorité: 09.11.1988 FR 8814634
(43) Date de publication de la demande: 16.05.1990
(73) Titulaire: ESSILOR INTERNATIONAL Compagnie Générale d'Optique, F-94028 Créteil Cédex (FR)
(72) Inventeur: Taboury, Jean, F-92230 Sceaux (FR); Chavel, Pierre, F-91380 Chilly Mazarin (FR); Joyeux, Denis, F-91940 Les Ulis (FR); Baude, Dominique, F-93400 Saint Ouen (FR)
(74) Mandataire: Martin, Jean-Jacques

(56) Documents cités:
- EP-A- 0 109 753
- FR-A- 1 497 717
- FR-A- 1 563 585
- US-A- 4 055 378
- US-A- 4 070 105
- US-A- 4 210 391
- US-A- 4 417 790

## Description

La présente invention concerne le domaine des lentilles de contact destinées à être placées sur la cornée de l'oeil.

Les spécialistes ont envisagé depuis quelques années de développer des lentilles diffractives (voir par exemple EP-A-0 064 812, US-A-4 637 697 ou encore la demande de brevet FR-88 06699 déposée le 19 mai 1988).

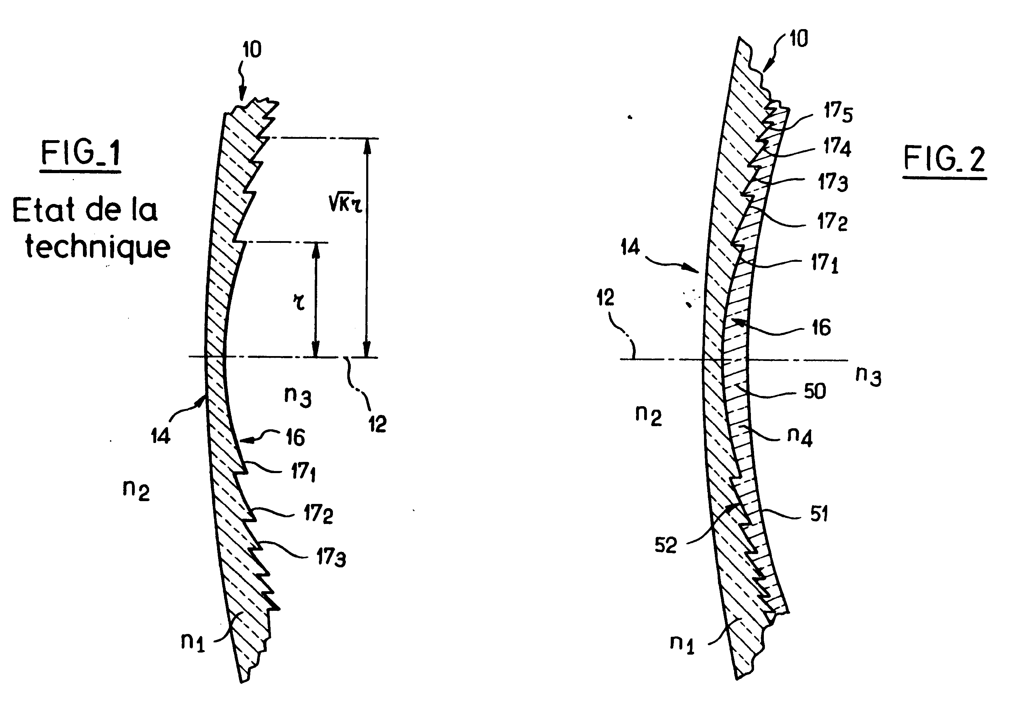

Les lentilles de contact diffractives gravées, comme illustré sur la figure 1 annexée sont formées généralement d'un composant 10 à deux dioptres 14, 16, dont l'un présente un réseau zoné de Fresnel, c'est-à-dire une série de structures 17₁, 17₂, 17₃ ... en relief, annulaires, concentriques autour de l'axe 12 de la lentille.

Les structures 17 ont généralement toutes le même profil. Elles possèdent de plus la même étendue en surface. Les rayons externes des différentes structures évoluent donc selon une progression géométrique du type : √K r , ou r désigne le rayon externe de la structure centrale et K désigne les entiers successifs.

Les focales fn du composant diffractif ainsi formées sont égales à : fn = r²/2n λ où
r = le rayon externe de la structure centrale,
n = l'ordre de diffraction,
λ = la longueur d'onde considérée.

L'ordre de diffraction n = +1 peut être obtenu avec des structures en relief du type kinoforme échantillonné, c'est-à-dire des structures présentant chacune un profil composé de M niveaux, avec M supérieur à 2, déphasés de 2 π/M.

Les ordres de diffraction n = +1 et n = -1 peuvent être obtenus simultanément avec des structures en relief du type fonction créneau générant un déphasage de π.

Les performances d'une lentille de contact diffractive gravée, en termes d'efficacité de diffraction, dépendent en premier lieu du produit : profondeur de gravure x différence des indices de part et d'autre du dioptre gravé. Ce produit est appelé généralement "profondeur optique de gravure".

La profondeur optique de gravure vaut généralement entre une fois et 1,5 fois la longueur d'onde moyenne d'utilisation (de l'ordre de 0,5 µm).

Pour diminuer les contraintes de précision sur la réalisation du composant (c'est-à-dire augmenter autant que possible la profondeur de gravure) il est apparu rapidement nécessaire aux spécialistes de placer le dioptre gravé côté cornée de l'oeil (la différence des indices n₁ - n₃ étant inférieure à n₁ - n₂ en appelant n₁ l'indice du matériau formant le composant, n₂ l'indice de l'air et n₃ l'indice des larmes).

On se reportera utilement aux documents antérieurs précités pour bien comprendre la structure et la fonction des lentilles de contact diffractives gravées.

On constate dans la pratique que ces lentilles n'ont pas fait l'objet d'exploitation industrielle à grande échelle.

Cela semble dû au fait que malgré leurs propriétés théoriques séduisantes, les lentilles de contact diffractives gravées présentent des inconvénients rédhibitoires.

D'une part, le dioptre gravé 16 qui présente des arêtes vives devant quasi nécessairement être placé côté cornée de l'oeil, comme indiqué ci-dessus, le port de lentilles de contact diffractives gravées conduit rapidement à des irritations.

D'autre part, le fonctionnement des lentilles de contact diffractives gravées varie largement en fonction des conditions d'hydratation du dioptre gravé.

Par ailleurs, la présence de gravures sur la face interne des lentilles est de nature à entraîner rapidement un dépôt de protéines et de graisses contenues dans le liquide lacrymal, c'est-à-dire à provoquer un encrassement de la face interne des lentilles entraînant une diminution des efficacités de diffraction.

Le document US-A-4210391 décrit une lentille de contact diffractive gravée comprenant un composant optique délimité par deux dioptres : l'un concave lisse placé du côte de la cornée de l'oeil, l'autre convexe gravé, et une couche d'un matériau optiquement transparent qui présente une surface extérieure lisse et est placée sur le dioptre gravé pour immerger la gravure.

Le document US-A-4055378 décrit une lentille de contact non diffractive munie de stries de très faibles profondeurs sur ses faces principales convexe et concave, dans le but d'obtenir des angles de contact différents pour chacune de ces deux faces principales, et par conséquent des caractéristiques hydrophiles différentes, supérieure sur la face principale convexe.

La présente invention a pour but de perfectionner les lentilles de contact diffractives connues, notamment en abaissant la précision de gravure requise.

A cette fin, la présente invention propose une lentille de contact diffractive gravée comprenant un composant optique délimité par deux dioptres : l'un lisse, l'autre gravé, et une couche d'un matériau optiquement transparent et présentant une surface extérieure lisse , placée sur le dioptre gravé de façon à immerger la gravure caractérisée par le fait que le dioptre lisse est convexe, tandis que le dioptre gravé est concave et placé du côté de la cornée de l'oeil, et que l'indice de réfraction du matériau formant la couche qui immerge le dioptre gravé est supérieur à l'indice du liquide lacrymal.

D'autres caractéristiques, buts et avantages de l'invention apparaîtront à la lecture de la description détaillée qui va suivre et en regard des dessins annexés donnés à titre d'exemple non limitatif et sur lesquels :
- la figure 1 représente une vue schématique en coupe axiale d'une lentille de contact diffractive gravée classique conforme à l'art antérieur,
- la figure 2 représente une vue schématique en coupe axiale d'une lentille de contact diffractive gravée conforme à la présente invention.

On aperçoit sur la figure 2 annexée une lentille de contact diffractive gravée, conforme à l'invention, qui comprend un composant classique 10 délimité par deux dioptres 14, 16, dont un dioptre 16 gravé.

Le premier dioptre 14 est formé d'une surface lisse, convexe vers l'extérieur du composant. Le dioptre 14 est formé par exemple d'une surface sphérique centrée sur un point placé sur l'axe 12 de la lentille.

Le second dioptre 16 s'appuie sur une surface moyenne concave vers l'extérieur. La surface moyenne du dioptre 16 correspond avantageusement à une surface sphérique centrée également sur un point centré sur l'axe 12 de la lentille.

Les profils moyens des dioptres 14 et 16 peuvent être adaptés pour définir un pouvoir de réfraction de base auquel s'ajoute un pouvoir de diffraction défini par le dioptre gravé 16.

Selon l'invention, la lentille représentée sur la figure 2 comprend en outre une couche 50 d'un matériau optiquement transparent placé contre le dioptre gravé 16 pour immerger la gravure.

La surface 52 de la couche 50 en contact avec le dioptre gravé 16 est donc complémentaire de la gravure ménagée dans le composant 10.

La seconde surface 51 de la couche 50, dirigée vers l'extérieur de la lentille est lisse et complémentaire de la surface externe de la cornée de l'oeil.

La couche 50 est réalisée en un matériau apte à être aisément mouillé par les larmes, pour éviter toute présence d'air à l'interface couche 50/larmes.

Par ailleurs, selon une caractéristique avantageuse le matériau composant la couche 50 est hydrophile. Grâce à cette propriété le liquide lacrymal est susceptible de remplir les vides éventuels laissés à la fabrication entre le dioptre gravé et la couche 50.

Selon une autre caractéristique de l'invention, le matériau composant la couche 50 possède un indice de réfraction n₄ supérieur à l'indice de réfraction n₃ du liquide lacrymal. Ainsi, la différence d'indices obtenue n₁ - n₄ étant inférieure à la différence d'indices n₁ - n₃ qui serait obtenue en l'absence de la couche 50, grâce à l'invention, à profondeur optique de gravure égale, on augmente la profondeur de gravure.

Cependant, de préférence, l'indice du matériau composant la couche 50 est voisin de l'indice de réfraction du liquide lacrymal, bien que supérieur à cet indice. Ainsi, dans l'hypothèse où ce dernier remplit des vides éventuels présents dans la couche 50 ou à l'interface dioptre gravé couche 50, la couche 50 rapportée sur le dioptre gravé 16 se comporte comme un composant sensiblement homogène.

A titre d'exemple non limitatif, le composant de base 10 d'indice n₁ peut être formé de polyméthacrylate de méthyle ou d'un copolymère silicone acrylate. La couche 50 rapportée selon l'invention est formée avantageusement de gélatine, de collagène ou par exemple de copolymères obtenus à partir de méthacrylate de méthyle et de n-vinyl pyrolidone, de tels matériaux étant décrits respectivement dans les brevets EP-0 011 523, FR-2 586 703 et FR-2 370 063.

La couche 50 peut être déposée sur le dioptre gravé 16 par surmoulage classique. En variante, la couche 50 peut être déposée sur le dioptre gravé 16 selon la technique classique, connue de l'homme de l'art, consistant à placer la lentille sensiblement horizontalement, (c'est-à-dire axe vertical et dioptre gravé dirigé vers le haut), à placer une goutte du matériau destiné à composer la couche 50 sur la surface supérieure de la lentille et à centrifuger l'ensemble.

La présente invention présente notamment les avantages suivants.

La cornée de l'oeil est protégée par la couche 50 vis-à-vis des arêtes du dioptre gravé. La lentille est donc mieux tolérée.

La surface externe 51 de la couche 50 peut être plus facilement adaptée à la surface de la cornée de l'oeil que la surface du dioptre gravé.

La présence permanente de la couche 50 en contact avec le dioptre gravé stabilise la différence d'indices à l'interface du dioptre vis-à-vis d'un manque passager d'hydratation.

De même, lorsque le matériau de la couche 50 est hydrophile, le liquide lacrymal étant susceptible de "perfuser" à travers le matériau, ce liquide peut combler les manques éventuels de matériau, notamment à l'interface dioptre gravé 16/couche 50. Ainsi la couche 50 apparaît sensiblement homogène sur le plan optique lorsque l'indice de réfraction du matériau est assez proche de l'indice de réfraction du liquide lacrymal.

La différence d'indices n₁ - n₄ étant inférieure à la différence d'indices n₁ - n₂, la précision de gravure exigée est moins forte qu'elle le serait avec un dioptre gravé en contact avec l'air. De plus, la différence d'indices n₁ - n₄ étant également inférieure à la différence d'indices n₁ - n₃ lorsque l'indice n₄ de la couche 50 est supérieure à l'indice du liquide lacrymal, on obtient en outre une précision de gravure exigée inférieure à celle requise pour des lentilles classiques dont le dioptre gravé est en contact avec la cornée de l'oeil.

Par exemple, lorsque le matériau formant le composant de base 10 est du polyméthacrylate de méthyle, l'indice n₁ = 1,49.

La profondeur de gravure requise est de l'ordre de : 0,5/(1,49 - 1) soit environ 1µm lorsque le dioptre gravé est en contact avec l'air.

On rappelle que la profondeur de gravure est égale au rapport entre la profondeur optique de gravure (entre une fois et 1,5 fois la longueur d'onde moyenne) et la différence des indices de part et d'autre du dioptre gravé.

La profondeur de gravure requise est de l'ordre de : 0,5/(1,49 - 1,34) = 3,33 µm lorsque le dioptre gravé est immergé dans le liquide lacrymal.

Enfin, la profondeur de gravure requise est de l'ordre de : 0,5/(1,49 - 1,378) = 4,46 µm lorsque le dioptre gravé est recouvert d'une couche de gélatine hydratée conformément à la présente invention.

L'avantage de précision obtenu grâce à la présente invention est donc d'un facteur de 4,5 par rapport au cas non immergé alors qu'il n'est que 3,3 pour une lentille immergée dans le liquide lacrymal.

On notera également que la face externe 14 de la lentille conforme à l'invention représentée sur la figure 2 reste disponible pour être formée avec une courbure quelconque, voire avec plusieurs courbures différentes selon la correction recherchée.

Bien entendu la présente invention n'est pas limitée au mode de réalisation particulier qui vient d'être décrit.

## Revendications

1. Lentille de contact diffractive gravée comprenant un composant optique (10) délimité par deux dioptres (14, 16) : l'un (14) lisse, l'autre (16) gravé, et une couche (50) d'un matériau optiquement transparent et présentant une surface extérieure (51) lisse, placée sur le dioptre gravé (16) de façon à immerger la gravure, caractérisée par le fait que le dioptre lisse (14) est convexe, tandis que le dioptre gravé (16) est concave et placé du côté de la cornée de l'oeil, et que l'indice de réfraction (n₄) du matériau formant la couche (50) qui immerge le dioptre gravé (16) est supérieur à l'indice (n₃) du liquide lacrymal.

2. Lentille de contact diffractive gravée selon la revendication 1, caractérisée par le fait que le matériau formant la couche (50) est aisément mouillable par le liquide lacrymal.

3. Lentille de contact diffractive gravée selon l'une des revendications 1 ou 2, caractérisée par le fait que le matériau formant la couche (50) est hydrophile.

4. Lentille de contact diffractive gravée selon l'une des revendications 1 à 3, caractérisée par le fait que l'indice de réfraction (n₄) du matériau formant la couche (50) est voisin de l'indice de réfraction (n₃) du liquide lacrymal, bien que supérieur à cet indice.

5. Lentille de contact diffractive gravée selon l'une des revendications 1 à 4, caractérisée par le fait que la couche (50) est réalisée à base de gélatine ou de collagène.

6. Lentille de contact diffractive gravée selon l'une des revendications 1 à 4, caractérisée par le fait que la couche (50) est réalisée à base de copolymères obtenus à partir de méthacrylate de méthyle et de n-vinyl pyrolidone.

7. Lentille de contact diffractive gravée selon l'une des revendications 1 à 6, caractérisée par le fait que l'indice de réfraction du matériau formant la couche (50) est de l'ordre de 1,378.

## Patentansprüche

1. Strukturierte Diffraktionskontaktlinse umfassend eine optische Komponente (10), die durch zwei Diopter (14, 16) begrenzt wird, von denen das eine (14) glatt und das andere (16) strukturiert ist, und eine Schicht (50) aus einem optisch transparenten Material, die eine äußere, glatte Oberfläche (51) aufweist und auf dem strukturierten Diopter (16) so angeordnet ist, daß sie in die Strukturierung eintaucht, dadurch **gekennzeichnet,** daß das glatte Diopter (14) konvex ist, während das strukturierte Diopter (16) konkav und auf der Seite der Hornhaut des Auges angeordnet ist, und daß der Brechungsindex (n₄) des Materials, das die Schicht (50) bildet, die in das strukturierte Diopter (16) eintaucht, größer als der Index (n₃) der Tränenflüssigkeit ist.

2. Strukturierte Diffraktionskontaktlinse nach Anspruch 1, dadurch **gekennzeichnet,** daß das die Schicht (50) bildende Material leicht durch die Tränenflüssigkeit benetzbar ist.

3. Strukturierte Diffraktionskontaktlinse nach einem der Ansprüche 1 oder 2, dadurch **gekennzeichnet,** daß das die Schicht (50) bildende Material hydrophil ist.

4. Strukturierte Diffraktionskontaktlinse nach einem der Ansprüche 1 bis 3, dadurch **gekennzeichnet,** daß der Brechungsindex (n₄) des die Schicht (50) bildenden Materials nahe an den Brechungsindex (n₃) der Tränenflüssigkeit herankommt, obwohl er größer als dieser Index ist.

5. Strukturierte Diffraktionskontaktlinse nach einem der Ansprüche 1 bis 4, dadurch **gekennzeichnet,** daß die Schicht (50) auf der Basis von Gelatine oder Kollagen hergestellt ist.

6. Strukturierte Diffraktionskontaktlinse nach einem der Ansprüche 1 bis 4, dadurch **gekennzeichnet,** daß die Schicht (50) auf der Basis von Copolymeren hergestellt ist, die aus Methacrylsäuremethylester und n-Vinyl-Pyrolidon erhalten werden.

7. Strukturierte Diffraktionskontaktlinse nach einem der Ansprüche 1 bis 6, dadurch **gekennzeichnet,** daß der Brechungsindex des die Schicht (50) bildenden Materials ungefähr 1,378 beträgt.

## Claims

1. A diffractive contact lens in relief comprising an optical component (10) delimited by two optical surfaces (14, 16) : one (14) which is smooth and the other (16) in relief, and a layer (50) of optically transparent material having a smooth outside surface (51) and placed over the optical surface (16) in relief so as to immerse the relief, characterized by the fact that the smooth optical surface (14) is convexe, while the relief optical surface (16) is concave and provided on the side of the cornea of the eye, and that the refractive index n₄ of the material forming the layer (50) which immerses the relief optical surface (16) is greater than the index n₃ of tear liquid.

2. A diffractive contact lens in relief according to claim 1, characterized by the fact that the material forming the smoothing layer (50) is easily wettable by tear liquid.

3. A diffractive contact lens in relief according to claim 1 or 2, characterized by the fact that the material forming the smoothing layer (50) is hydrophilic.

4. A diffractive contact lens in relief according to any one of claims 1 to 3, characterized by the fact that the refractive index n₄ of the material forming the smoothing layer (50) is close to the refractive index n₃ of tear liquid.

5. A diffractive contact lens in relief according to any one of claims 1 to 4, characterized by the fact that the smoothing layer (50) is based on gelatin or colagen.

6. A diffractive contact lens in relief according to any one of claims 1 to 4, characterized by the fact that the smoothing layer (50) is based on copolymers obtained from methyl methacrylate and n-vinylpyrolidone.

7. A diffractive contact lens in relief according to any one of claims 1 to 6, characterized by the fact that the refractive index of the material constituting the smoothing layer (50) is about 1.378.
